# FASCICULE DE BREVET EUROPEEN

(11) **EP 1 681 491 B1**
(45) Date de publication et mention de la délivrance du brevet: **13.06.2007**
(21) Numéro de dépôt: 05290098.2
(22) Date de dépôt: 17.01.2005
(51) Int. Cl.: F16F 9/36

(54) **Amortisseur hydraulique magnéto-rhéologique**
Hydraulischer magnetorheologischer Stossdämpfer
Magneto-rheological hydraulic damper

(43) Date de publication de la demande: 19.07.2006
(73) Titulaire: Delphi Technologies, Inc., Troy, MI 48007 (US)
(72) Inventeur: Prevot, Benoît, 78400 Chatou (FR); Lagarde, Thierry, 95700 Roissy En France (FR); Le Moigne, Thierry, 60560 Orry La Ville (FR)
(74) Mandataire: Laget, Jean-Loup

(56) Documents cités:
- EP-A- 1 437 523
- EP-A- 1 452 767
- DE-A1- 3 132 434
- US-A- 3 104 916
- US-A1- 2004 182 661
- US-B1- 6 390 258

## Description

La présente invention concerne un amortisseur hydraulique magnéto-rhéologique (MR) selon le préambule de la revendication 1. Un tel amortisseur est connu du US-A-2004/0182661.

Les amortisseurs hydrauliques de ce genre sont, entre autres, utilisés pour isoler les sources de vibration dans des équipements industriels et dans des machines, mais également dans les véhicules automobiles pour amortir les mouvements de caisse, empêcher la perte de contact des roues avec le sol et absorber les vibrations de roulement.

Ces amortisseurs hydrauliques magnéto-rhéologiques ont dernièrement trouvé une nouvelle application dans les systèmes de suspension semi-pilotée permettant de faire varier l'amortissement en continu et en temps réel. Les systèmes comportent dans ce but une unité de commande qui analyse les informations obtenues de capteurs de déplacement, du dispositif de direction et des freins ou autre, et qui commande les amortisseurs en conséquence.

Le fluide magnéto-rhéologique contenu dans ces amortisseurs est un fluide de synthèse comprenant des particules métalliques dont le diamètre est de l'ordre du micromètre et qui sont en suspension dans le fluide. Lorsqu'un courant électrique est appliqué à une bobine électromagnétique logée dans le piston de l'amortisseur, les particules exposées au champ magnétique s'alignent en modifiant la structure de l'écoulement du liquide. On obtient ainsi une réaction instantanée aux besoins de l'utilisateur, ce qui donne un meilleur confort sur routes défoncées et permet d'améliorer la qualité du comportement de la voiture, ainsi que la sécurité et la fiabilité.

La structure et le principe de fonctionnement de ces amortisseurs hydrauliques magnéto-rhéologiques sont bien connus et ne seront pas décrits en détail.

Cependant, afin de permettre un fonctionnement instantané et souple d'un tel amortisseur hydraulique au niveau mécanique, plus précisément au niveau du mouvement de va-et-vient de la tige de piston à travers le trou axial de l'un des dispositifs de fermeture de l'amortisseur, il est préférable d'assurer la lubrification de la tige de piston. Cette lubrification est souhaitable afin de permettre à la tige de piston d'effectuer son mouvement de va-et-vient en réduisant la génération de chaleur et l'usure dans le dispositif afin de favoriser l'étanchéité. Elle doit en outre réduire les frottements parasites.

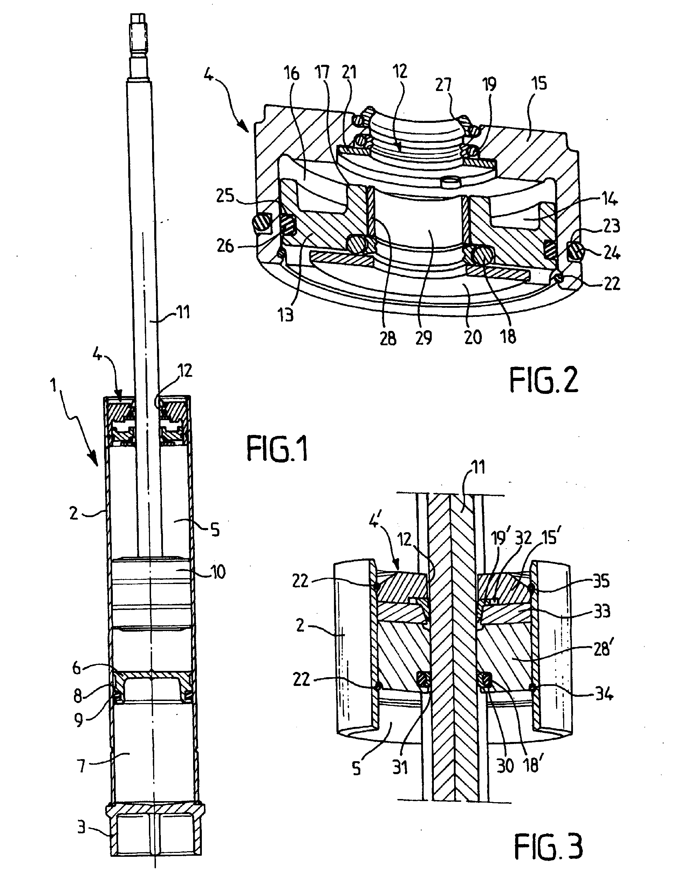

Cette lubrification de la tige de piston est dans certains amortisseurs hydrauliques magnéto-rhéologiques connus obtenue à l'aide d'un dispositif de lubrification comprenant une chambre contenant un fluide de lubrification placée à l'intérieur du dispositif de fermeture à travers lequel passe la tige de piston. Un dispositif de fermeture de ce genre est illustré à la figure 2, alors que la figure 1 illustre la structure générale d'un tel amortisseur hydraulique magnéto-rhéologique.

Cet amortisseur hydraulique magnéto-rhéologique 1 comporte un corps cylindrique tubulaire 2 fermé à l'une des ses extrémités par un premier dispositif de fermeture 3 et à son extrémité opposée par un deuxième dispositif de fermeture 4 de manière à délimiter à l'intérieur du corps cylindrique une chambre principale 5 contenant un fluide magnéto-rhéologique.

Dans l'exemple illustré, un élément de séparation transversal 6 sous forme d'une plaque à jupe est disposé dans le corps cylindrique pour diviser l'intérieur de celui-ci pour l'obtention d'une chambre secondaire 7 remplie d'un gaz sous pression.

La jupe de cet élément de séparation 6 comporte sur sa périphérie extérieure une gorge 8 dans laquelle un joint d'étanchéité 9 est logé.

Un piston 10 est monté axialement déplaçable dans la chambre principale 5. Il comporte dans son intérieur un dispositif générateur d'un champ magnétique. Ce dispositif n'est pas montré sur la figure 1 puisqu'il est bien connu dans ce domaine technique, ainsi que son fonctionnement.

Le piston 10 est fixé à l'une des extrémités d'une tige de piston 11 faisant saillie hors du corps cylindrique 2 par un trou axial 12 prévu dans le deuxième dispositif de fermeture 4 le long de l'axe A-A. Dans l'application à une suspension de véhicule (non représentée), l'extrémité libre de cette tige de piston 11 est reliée au châssis (non représenté) du véhicule, alors que l'extrémité de l'amortisseur fermée par le premier dispositif de fermeture 3 est reliée à un bras de suspension.

La figure 2 montre à plus grande échelle le deuxième dispositif de fermeture 4 à chambre de lubrification de cet amortisseur hydraulique connu 1. Ce deuxième dispositif de fermeture 4 tient ainsi le fluide confiné dans la chambre 5, et il a en outre pour fonction de servir au guidage de la tige de piston 11 et d'assurer la lubrification de celle-ci.

Ce deuxième dispositif de fermeture 4 comporte un élément en forme de disque 13 pourvu du trou axial 12 par lequel fait saillie la tige de piston 11 et il est sur sa face tournée vers l'extérieur pourvu d'une rainure concentrique 14 qui avec un couvercle à jupe 15 délimite une chambre 16 contenant un lubrifiant tel qu'une huile de lubrification. La face du disque ne vient pas en appui contre la face opposée du couvercle de manière à définir un interstice 17 mettant la chambre 16 en communication directe avec la tige de piston 11 pour la lubrification de celle-ci.

L'huile dans la chambre 16 est isolée du fluide dans la chambre principale 5 à l'aide de premiers moyens d'étanchéité 18 et est empêchée de s'échapper vers extérieur à l'aide de deuxièmes moyens d'étanchéité 19.

Une rondelle de maintien 20, 21 est fixée en dessous des premiers respectivement des deuxièmes moyens d'étanchéité 18', 19' et une bague d'arrêt 22 maintient l'élément en forme de disque 13 en place dans la jupe du couvercle 15.

Le couvercle 15 comporte sur la face périphérique de sa jupe une gorge 23 recevant un joint d'étanchéité 24 assurant l'étanchéité entre le couvercle et la face intérieure du corps cylindrique 2.

L'élément en forme de disque 13 comporte de manière similaire sur sa face périphérique une gorge 25 recevant un joint d'étanchéité 26 assurant l'étanchéité entre le disque 13 et la jupe du couvercle 15. Finalement, une bague racleur 27 est disposée autour de l'ouverture du trou axial vers l'extérieur.

Un organe de guidage 28 de la tige de piston 11 est disposé à l'intérieur du trou axial 12, entre les premiers moyens d'étanchéité 18 et les deuxièmes moyens d'étanchéité 19, plus précisément dans l'élément en forme de disque 13. Cet organe de guidage 28 a la forme d'une douille dont la face intérieure constitue une surface de guidage cylindrique 29. Afin de réduire la friction dans l'organe de guidage, cette surface de guidage peut être revêtue d'une couche de tétrafluoréthylène ou similaire.

Même si ce dispositif de fermeture 4 donne généralement satisfaction, il est néanmoins d'une structure complexe et relativement cher à fabriquer.

Le but de l'invention est de remédier à ces inconvénients en proposant un amortisseur hydraulique magnéto-rhéologique extrêmement simple et fiable apte à assurer la lubrification de la tige de piston.

Ce but est atteint à l'aide d'un organe de guidage effectué en un matériau présentant une porosité telle qu'il devient suintant afin de laisser passer l'huile du fluide magnéto-rhéologique de ladite chambre jusqu'à ladite surface de guidage tout en empêchant lesdites particules métalliques d'y pénétrer.

Selon d'autres caractéristiques de l'invention :
- ledit matériau dudit organe de guidage est un matériau fritté sans liant ;
- la porosité ouverte dudit organe de guidage est d'au moins 12% de sa surface ;
- ledit organe de guidage a la forme d'un disque dont le diamètre extérieur correspond sensiblement au diamètre intérieur dudit corps cylindrique ;
- ledit trou axial dudit organe de guidage comporte un évidement circulaire concentrique dans lequel sont disposés lesdits premiers moyens d'étanchéité ;
- ledit évidement est une gorge prévue sur la surface de guidage dudit organe de guidage ;
- ladite gorge communique avec ladite chambre par un passage circulaire formant un interstice par rapport à la tige de piston ;
- ledit évidement circulaire est défini par un épaulement circulaire de manière à s'ouvrir vers ladite chambre ;
- ledit deuxième dispositif de fermeture comporte sur sa face extérieure un couvercle pourvu d'un trou axial de passage de la tige de piston et d'un évidement circulaire dans lequel lesdits deuxièmes moyens d'étanchéité sont disposés, et des moyens d'étanchéité supplémentaires sous forme d'un disque circulaire sont intercalés entre ledit organe de guidage et le couvercle ;
- l'organe de guidage est en appui contre ledit couvercle et comporte une protubérance circulaire reçue dans un évidement circulaire dudit couvercle ;
- ledit organe de guidage comporte une gorge périphérique apte à recevoir une bague d'arrêt.

D'autres caractéristiques et avantages de l'invention ressortiront de la description qui va suivre de deux modes de réalisation non limitatifs de l'invention, en référence aux figures annexées dans lesquelles :
- la figure 1 est une vue en coupe longitudinale de l'amortisseur hydraulique connu décrit ci-dessus ;
- la figure 2 est une vue en perspective et en coupe du dispositif de fermeture et de guidage de la tige de piston de l'amortisseur de la figure 1 ;
- la figure 3 est une vue partielle en coupe et en perspective montrant un dispositif de fermeture selon l'invention servant également au guidage d'une tige de piston ;
- la figure 4 est une vue partielle en coupe et à plus grande échelle du dispositif de fermeture de la figure 3 ;
- la figure 5 est une vue éclatée des éléments constitutifs du dispositif de fermeture des figures 3 et 4 ;
- la figure 6 est une vue en coupe montrant les éléments de la figure 5, après assemblage ;
- la figure 7 est une vue analogue à celle de la figure 3 montrant un deuxième dispositif de fermeture selon l'invention ;
- la figure 8 est une vue éclatée des éléments constitutifs du dispositif de fermeture de la figure 7 ;
- la figure 9 est une vue analogue à celle de la figure 4 montrant le dispositif de fermeture de la figure 7 ;
- la figure 10 montre une variante du dispositif de fermeture des figures 7 à 9.

Dans les figures, les éléments identiques ou équivalents porteront les mêmes signes de référence.

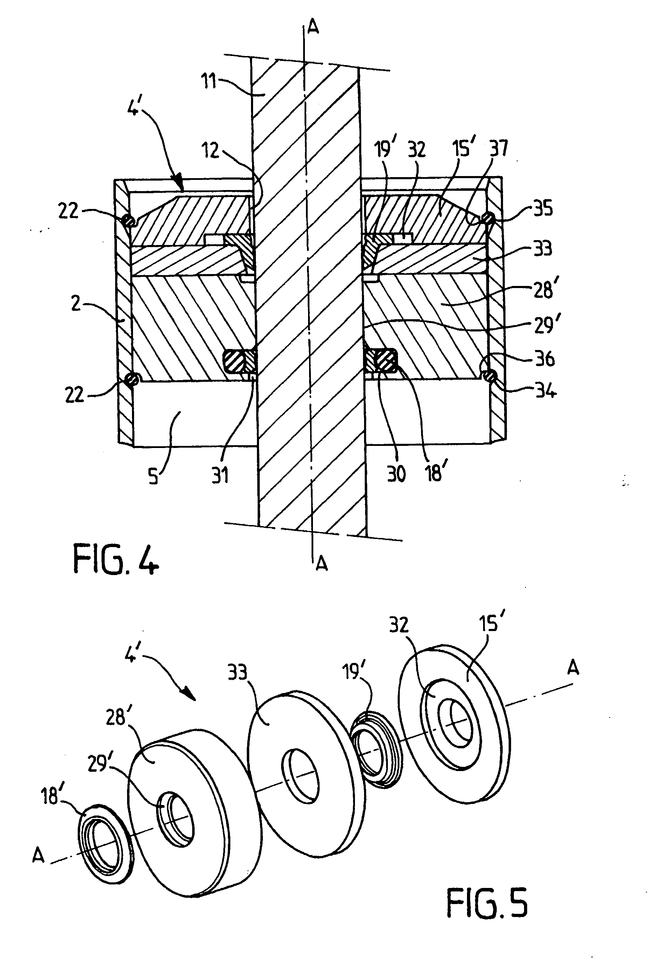

L'amortisseur hydraulique magnéto-rhéologique selon l'invention diffère de l'amortisseur hydraulique 1 décrit en référence aux figures 1 et 2 par la structure et le fonctionnement du deuxième dispositif de fermeture 4. Pour cette raison, uniquement cette partie de l'amortisseur hydraulique magnéto-rhéologique est illustrée sur les figures 3 à 10.

Les figures 3 à 6 montrent un tel deuxième dispositif de fermeture 4' selon l'invention. Ce deuxième dispositif de fermeture 4' est pourvu d'un trou axial traversant 12 par lequel s'étend la tige de piston 11. La tige de piston est guidée par un organe de guidage 28' sous forme d'un disque dont le diamètre extérieur correspond sensiblement au diamètre intérieur du corps tubulaire cylindrique 2 de l'amortisseur. Le trou axial de ce disque constitue une surface de guidage 29' de la tige de piston 11.

Le trou axial de ce disque 28' comporte un évidement circulaire concentrique sous forme d'une gorge 30 dans lequel sont disposés des premiers moyens d'étanchéité dynamiques 18'. Cette gorge 30 communique avec la chambre principale 5 par un passage circulaire 31 formant un interstice par rapport à la tige de piston 11.

Ce deuxième dispositif de fermeture 4' est fermé vers l'extérieur par un couvercle 15' comportant un trou axial de passage de la tige de piston 11 et, sur sa face tournée vers le disque 28', un évidement circulaire 32 dans lequel des deuxièmes moyens d'étanchéité dynamiques 19' sont disposés. Dans le mode de réalisation illustré sur les figures 3 à 6, des moyens d'étanchéité supplémentaires statiques sous forme d'un disque circulaire 33 sont intercalés entre l'organe de guidage 28' et le couvercle 15' et comportent un trou axial tronconique à plus grand diamètre que celui de la tige de piston 11 afin de recevoir une partie des moyens d'étanchéité supplémentaires, alors qu'une partie d'extension radiale de ces moyens d'étanchéité est serrée entre le disque 33 et le couvercle 15'.

Pour la fixation du deuxième dispositif de fermeture 4' à l'intérieur du corps cylindrique 2, celui-ci comporte sur sa face intérieure deux gorges 34, 35 recevant une bague d'arrêt respective 22 partiellement logée dans une gorge périphérique 36, 37 prévue sur l'organe de guidage 28' respectivement sur le couvercle 15'.

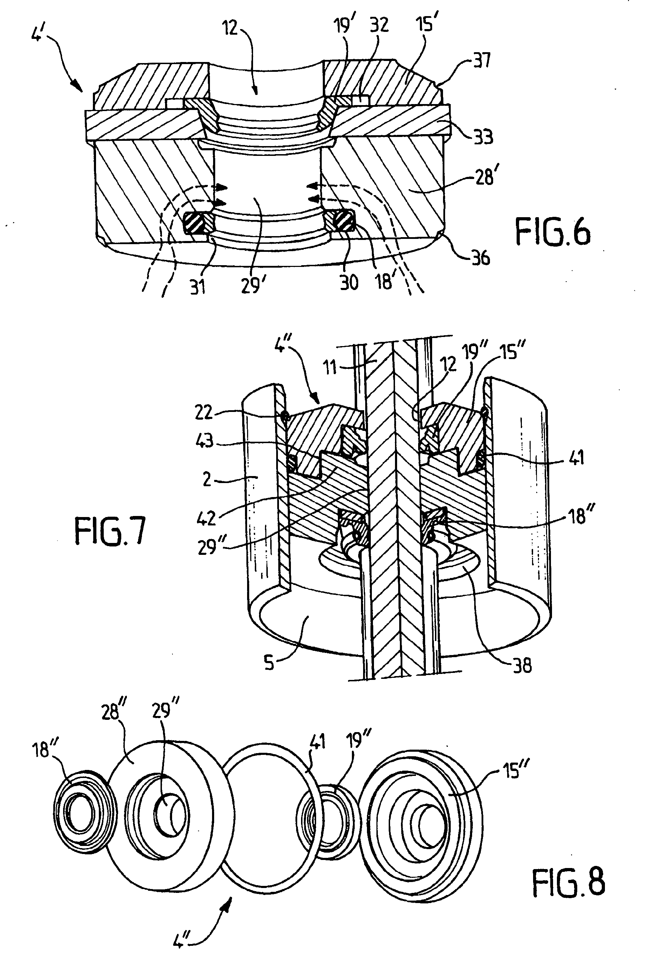

Selon une caractéristique essentielle de l'invention, le fluide magnéto-rhéologique dans la chambre principale 5 contient une huile pouvant lubrifier et l'organe de guidage 28' est effectué en un matériau présentant une porosité telle qu'il devient suintant (schématiquement indiqué par les flèches à la figure 6) afin de laisser passer l'huile du fluide magnéto-rhéologique de la chambre 5 jusqu'à ladite surface de guidage 29' tout en empêchant les particules métalliques contenues dans le fluide d'y pénétrer. De cette manière, la lubrification de la tige à l'intérieur de l'organe de guidage 28' est assurée par l'intermédiaire de l'organe de guidage 28' qui fait fonction de filtre.

Une porosité bien adaptée à cette utilisation peut être obtenue à partir d'un matériau fritté, métallique ou non métallique, sans liant et en maîtrisant la taille ou la granulométrie des grains de poudre, ainsi que la densité du matériau obtenue lors d'un compactage préalable au frittage et nécessaire à la mise en forme de la pièce. Lors du frittage, les grains se soudent entre eux et forment des pores dans toute la pièce poreuse.

Il a été constaté qu'une porosité ouverte ≥ 12% sur la surface de l'organe de guidage 28' donne des résultats satisfaisant.

A la place de la poudre, il est également possible d'utiliser des microbilles calibrées afin de mieux maîtriser la taille des pores obtenus.

Le matériau utilisé est de préférence un alliage fer-cuivre-carbone fritté.

Les figures 7 à 9 montrent un deuxième mode de réalisation de l'amortisseur hydraulique magnéto-rhéologique selon l'invention. Le deuxième dispositif de fermeture 4" de l'amortisseur comporte un organe de guidage 28" de la tige de piston 11, cet organe de guidage étant également formé par un disque en un matériau poreux analogue à celui décrit en référence aux figures 2 à 6 et comporte une surface de guidage similaire 29". L'organe de guidage 28" est disposé entre des premiers moyens d'étanchéité 18" et des deuxièmes moyens d'étanchéité 19" logés dans un évidement circulaire 32 du couvercle 15".

Les premiers moyens d'étanchéité sont disposés dans un évidement circulaire concentrique 38 défini par un épaulement circulaire 39 en s'ouvrant vers la chambre principale 5.

Un couvercle 15" est disposé directement contre la face extérieure de l'organe de guidage 28". Ce couvercle comporte sur sa périphérie un évidement circulaire 40 ouvert vers le corps cylindrique 2 et vers l'organe de guidage 28" pour recevoir un joint d'étanchéité 41 assurant l'étanchéité entre ces éléments.

L'organe de guidage 28" comporte sur sa face extérieure une protubérance circulaire 42 reçue dans un évidement circulaire central 43 de forme sensiblement complémentaire effectué dans le couvercle 15".

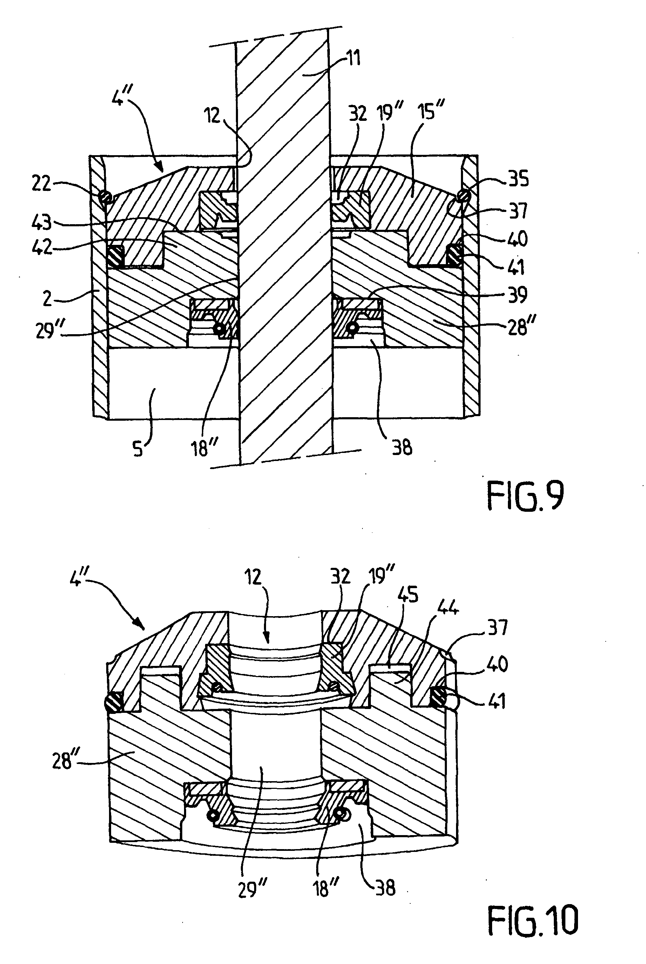

La figure 10 montre une variante du dispositif de fermeture 4" de la figure 9 qui essentiellement diffère de ce dernier par le fait que la protubérance circulaire sur l'organe de guidage 28" a la forme d'une nervure 44 reçue dans une nervure circulaire effectuée dans le couvercle 15".

Est ainsi obtenu un amortisseur hydraulique magnéto-rhéologique très simple et fiable et dans lequel la lubrification de la tige de piston est assurée sans qu'on soit obligé de prévoir une chambre de lubrification contenant un lubrifiant.

## Revendications

1. Amortisseur hydraulique magnéto-rhéologique comportant un corps cylindrique tubulaire (2) fermé à l'une de ses extrémités par un premier dispositif de fermeture (3) et à son extrémité opposée par un deuxième dispositif de fermeture (4; 4'; 4") de manière à délimiter une chambre (5) contenant un fluide magnéto-rhéologique comportant des particules métalliques et une huile pouvant lubrifier, un piston (10) étant monté axialement déplaçable dans ladite chambre (5) et fixé à l'une des extrémités d'une tige de piston (11) faisant saillie hors du corps cylindrique (2) par un trou axial (12) prévu dans ledit deuxième dispositif de fermeture (4; 4'; 4") tout en étant lubrifiée à l'intérieur de celui-ci, un organe de guidage (28; 28'; 28") de la tige de piston (11) comportant une surface de guidage (29; 29'; 29") cylindrique étant disposé à l'intérieur dudit trou axial (12) entre des premiers moyens d'étanchéité (18; 18'; 18 ") et des deuxièmes moyens d'étanchéité (19; 19'; 19") disposés plus vers l'extérieur par rapport auxdits premiers moyens d'étanchéité, **caractérisé par le fait que** ledit organe de guidage (28'; 28") est effectué en un matériau présentant une porosité telle qu'il devient suintant afin de laisser passer l'huile du fluide magnéto-rhéologique de ladite chambre (5) jusqu'à ladite surface de guidage (29; 29'; 29") tout en empêchant lesdites particules métalliques d'y pénétrer.

2. Amortisseur hydraulique magnéto-rhéologique selon la revendication 1, **caractérisé par le fait que** ledit matériau dudit organe de guidage (28'; 28") est un matériau fritté sans liant.

3. Amortisseur hydraulique magnéto-rhéologique selon la revendication 1 ou 2, **caractérisé par le fait que** la porosité ouverte dudit organe de guidage (28'; 28") est d'au moins 12% de sa surface.

4. Amortisseur hydraulique magnéto-rhéologique selon l'une quelconque des revendications précédentes, **caractérisé par le fait que** ledit organe de guidage (28'; 28") a la forme d'un disque dont le diamètre extérieur correspond sensiblement au diamètre intérieur dudit corps cylindrique (2).

5. Amortisseur hydraulique magnéto-rhéologique selon l'une quelconque des revendications précédentes, **caractérisé par le fait que** ledit trou axial (12) dudit organe de guidage (28'; 28") comporte un évidement circulaire concentrique (30; 38) dans lequel sont disposés lesdits premiers moyens d'étanchéité (18'; 18").

6. Amortisseur hydraulique magnéto-rhéologique selon la revendication 5, **caractérisé par le fait que** ledit évidement est une gorge (30) prévue sur la surface de guidage (29') dudit organe de guidage (28').

7. Amortisseur hydraulique magnéto-rhéologique selon la revendication 6, **caractérisé par le fait que** ladite gorge (30) communique avec ladite chambre (5) par un passage circulaire (31) formant un interstice par rapport à la tige de piston (11).

8. Amortisseur hydraulique magnéto-rhéologique selon la revendication 5, **caractérisé par le fait que** ledit évidement circulaire est défini par un épaulement circulaire (39) de manière à s'ouvrir vers ladite chambre (5).

9. Amortisseur hydraulique magnéto-rhéologique selon l'une quelconque des revendications précédentes, dans lequel ledit deuxième dispositif de fermeture (4; 4'; 4") comporte sur sa face extérieure un couvercle (15; 15'; 15") pourvu d'un trou axial de passage de la tige de piston (11) et d'un évidement circulaire (25; 32) dans lequel lesdits deuxièmes moyens d'étanchéité (19; 19'; 19") sont disposés, **caractérisé par le fait que** des moyens d'étanchéité supplémentaires sous forme d'un disque circulaire (33) sont intercalés entre ledit organe de guidage (28') et le couvercle (4').

10. Amortisseur hydraulique magnéto-rhéologique selon l'une quelconque des revendications 1 à 8, dans lequel ledit deuxième dispositif de fermeture (4; 4'; 4") comporte sur sa face extérieure un couvercle (15; 15'; 15") pourvu d'un trou axial de passage de la tige de piston (11) et d'un évidement circulaire (25; 32) dans lequel lesdits deuxièmes moyens d'étanchéité (19; 19'; 19") sont disposés, **caractérisé par le fait que** l'organe de guidage (28") est en appui contre ledit couvercle (15") et comporte une protubérance circulaire (42) reçue dans un évidement circulaire (43) dudit couvercle (4").

11. Amortisseur hydraulique magnéto-rhéologique selon l'une quelconque des revendications précédentes, **caractérisé par le fait que** ledit organe de guidage (28') comporte une gorge périphérique (36) apte à recevoir une bague d'arrêt (22).

## Claims

1. Magnetorheological hydraulic damper comprising a tubular cylindrical body (2) closed at one of its ends by a first closure device (3) and at its opposite end by a second closure device (4; 4'; 4") so as to define a chamber (5) containing a magnetorheological fluid that includes metal particles and an oil that can lubricate a piston (10), which is mounted so as to move axially in said chamber (5) and fastened to one of the ends of a piston rod (11) projecting out of the cylindrical body (2) via an axial hole (12) provided in said second closure device (4; 4'; 4") while being lubricated inside the latter, a guiding member (28; 28'; 28") for guiding the piston rod (11), having a cylindrical guiding surface (29; 29'; 29"), being placed inside said axial hole (12) between first sealing means (18; 18'; 18") and second sealing means (19; 19'; 19") placed further to the outside than said first sealing means, **characterized in that** said guiding member (28', 28") is made of a material having a porosity such that it becomes weepy, so as to let the oil of the magnetorheological fluid in said chamber (5) pass through it as far as said guiding surface (29; 29'; 29") while preventing said metal particles from penetrating thereinto.

2. Magnetorheological hydraulic damper according to Claim 1, **characterized in that** said material of said guiding member (28'; 28") is a binderless sintered material.

3. Magnetorheological hydraulic damper according to Claim 1 or 2, **characterized in that** the open porosity of said guiding member (28'; 28") is at least 12% of its surface.

4. Magnetorheological hydraulic damper according to any one of the preceding claims, **characterized in that** said guiding member (28'; 28") has the form of a disc, the outside diameter of which corresponds substantially to the inside diameter of said cylindrical body (2).

5. Magnetorheological hydraulic damper according to any one of the preceding claims, **characterized in that** said axial hole (12) in said guiding member (28'; 28") includes a concentric circular recess (30; 38) in which said first sealing means (18'; 18") are placed.

6. Magnetorheological hydraulic damper according to Claim 5, **characterized in that** said recess is a groove (30) provided on the guiding surface (29') of said guiding member (28').

7. Magnetorheological hydraulic damper according to Claim 6, **characterized in that** said groove (30) communicates with said chamber (5) via a circular passage (31) forming an interstice relative to the piston rod (11).

8. Magnetorheological hydraulic damper according to Claim 5, **characterized in that** said circular recess is defined by a circular shoulder (39) so as to open into said chamber (5).

9. Magnetorheological hydraulic damper according to any one of the preceding claims, in which said second closure device (4; 4'; 4") includes, on its outer face, a cover (15; 15'; 15") provided with an axial hole for passage of the piston rod (11) and with a circular recess (25; 32) in which said second sealing means (19; 19'; 19") are placed, **characterized in that** additional sealing means in the form of a circular disc (3) are inserted between said guiding member (28') and the cover (4').

10. Magnetorheological hydraulic damper according to any one of Claims 1 to 8, in which said second closure device (4; 4'; 4") includes, on its outer face, a cover (15; 15'; 15") provided with an axial hole for passage of the piston rod (11) and with a circular recess (25; 32) in which said second sealing means (19; 19'; 19") are placed, **characterized in that** the guiding member (28") bears against said cover (15") and includes a circular protuberance (42) housed in a circular recess (43) of said cover (4").

11. Magnetorheological hydraulic damper according to any one of the preceding claims, **characterized in that** said guiding member (28') includes a peripheral groove (36) capable of housing a stop ring (22).

## Patentansprüche

1. Magnetorheologischer Hydraulikdämpfer mit einem röhrenförmigen Zylinderkörper (2), der an einem seiner Enden durch eine erste Verschlussvorrichtung (3) und an seinem gegenüberliegenden Ende durch eine zweite Verschlussvorrichtung (4; 4'; 4") so verschlossen ist, dass eine Kammer (5) abgegrenzt wird, die ein magnetorheologisches Fluid enthält, welches Metallpartikel und ein schmierfähiges Öl aufweist, wobei ein Kolben (10) axial verschiebbar in der Kammer (5) montiert und an einem der Enden an einem Kolbenschaft (11) befestigt ist, der durch eine in der zweiten Verschlussvorrichtung (4; 4'; 4") vorgesehenen Axialöffnung (12) aus dem Zylinderkörper (2) herausragt und dabei im Inneren der Verschlussvorrichtung geschmiert wird, wobei ein Führungsmittel (28; 28'; 28") des Kolbenschaftes (11), das eine zylindrische Führungsfläche (29; 29'; 29") aufweist, im Inneren der Axialöffnung (12) zwischen ersten Dichtungsmitteln (18; 18'; 18") und zweiten, gegenüber den ersten Dichtungsmitteln weiter außen befindlichen Dichtungsmitteln (19; 19'; 19") angeordnet ist, **dadurch gekennzeichnet, dass** das Führungsmittel (28'; 28") aus einem Material besteht, das eine solche Porosität aufweist, dass es sickernd wird, um das Öl des magnetorheologischen Fluids aus der Kammer (5) bis zu der Führungsfläche (29; 29'; 29") passieren zu lassen, während die Metallpartikel daran gehindert werden, dort einzudringen.

2. Magnetorheologischer Hydraulikdämpfer gemäß Anspruch 1, **dadurch gekennzeichnet, dass** das Material des Führungsmittels (28'; 28") ein bindemittelfreies Sintermaterial ist.

3. Magnetorheologischer Hydraulikdämpfer gemäß Anspruch 1 oder 2, **dadurch gekennzeichnet, dass** die offene Porosität des Führungsmittels (28'; 28") wenigstens 12 % von dessen Oberfläche ausmacht.

4. Magnetorheologischer Hydraulikdämpfer gemäß einem der vorhergehenden Ansprüche, **dadurch gekennzeichnet, dass** das Führungsmittel (28'; 28") die Form einer Scheibe aufweist, deren Außendurchmesser im wesentlichen dem Innendurchmesser des Zylinderkörpers (2) entspricht.

5. Magnetorheologischer Hydraulikdämpfer gemäß einem der vorhergehenden Ansprüche, **dadurch gekennzeichnet, dass** die Axialöffnung (12) des Führungsmittels (28'; 28") eine konzentrische, kreisförmige Ausnehmung (30; 38) aufweist, in welcher die ersten Dichtungsmittel (18'; 18") angeordnet sind.

6. Magnetorheologischer Hydraulikdämpfer gemäß Anspruch 5, **dadurch gekennzeichnet, dass** die Ausnehmung eine in der Führungsfläche (29') des Führungsmittels (28') ausgesparte Nut (30) ist.

7. Magnetorheologischer Hydraulikdämpfer gemäß Anspruch 6, **dadurch gekennzeichnet, dass** die Nut (30) über einen kreisförmigen Durchlass (31), der gegenüber dem Kolbenschaft (11) einen Zwischenraum bildet, mit der Kammer (5) kommuniziert.

8. Magnetorheologischer Hydraulikdämpfer gemäß Anspruch 5, **dadurch gekennzeichnet, dass** die kreisförmige Ausnehmung durch eine kreisförmige Schulter (39) so definiert wird, dass sie sich in Richtung der Kammer (5) öffnet.

9. Magnetorheologischer Hydraulikdämpfer gemäß einem der vorhergehenden Ansprüche, bei dem die zweite Verschlussvorrichtung (4; 4'; 4") auf ihrer Außenseite einen Deckel (15; 15'; 15") aufweist, der mit einer Axialöffnung für den Durchlass des Kolbenschaftes (11) und einer kreisförmigen Ausnehmung (25; 32), in welcher die zweiten Dichtungsmittel (19; 19'; 19") angeordnet sind, versehen ist, **dadurch gekennzeichnet, dass** zusätzliche Dichtungsmittel in Form einer Kreisscheibe (33) zwischen dem Führungsmittel (28') und dem Deckel (4') eingesetzt sind.

10. Magnetorheologischer Hydraulikdämpfer gemäß einem der Ansprüche 1 bis 8, bei dem die zweite Verschlussvorrichtung (4; 4'; 4") auf ihrer Außenseite einen Deckel (15; 15'; 15") aufweist, der mit einer Axialöffnung für den Durchlass des Kolbenschaftes (11) und einer kreisförmigen Ausnehmung (25; 32), in welcher die zweiten Dichtungsmittel (19; 19'; 19") angeordnet sind, versehen ist, **dadurch gekennzeichnet, dass** das Führungsmittel (28") gegen den Deckel (15") in Anlage ist und einen kreisförmigen Höcker (42) aufweist, der in einer kreisförmigen Ausnehmung (43) des Deckels (4)") aufgenommen wird.

11. Magnetorheologischer Hydraulikdämpfer gemäß einem der vorhergehenden Ansprüche, **dadurch gekennzeichnet, dass** das Führungsmittel (28') eine Umfangsnut (36) aufweist, welche einen Haltering (22) aufnehmen kann.
